(19) Europäisches Patentamt

European Patent Office

Office européen des brevets

(11) **EP 1 059 521 A2**

(12) **EUROPEAN PATENT APPLICATION**

(43) Date of publication:
**13.12.2000 Bulletin 2000/50**

(51) Int. Cl.$^{7}$: **G01N 15/06**, G01G 3/16

(21) Application number: **00304827.9**

(22) Date of filing: **07.06.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **07.06.1999 US 326936**

(71) Applicant: **MIE, Inc**
**Bedford, Massachusetts 01730 (US)**

(72) Inventor: **Lilienfeld, Pedro**
**Lexington, Massachusetts 02420 (US)**

(74) Representative:
**Cross, Rupert Edward Blount et al**
**BOULT WADE TENNANT,**
**Verulam Gardens**
**70 Gray's Inn Road**
**London WC1X 8BT (GB)**

(54) **System and method for continuous monitoring of particulates**

(57)    A system for, and method of, accurately monitoring airborne particulate mass concentration are described. A corona wire is disposed in spaced relation to one surface of a membrane forming an electrostatic precipitator. An activation circuit causes the electrostatic precipitator to create an ionizing volume in which particulates are electrically charged so that the charged particulates are collected on the membrane. An actuation circuit causes oscillatory movement of the membrane, and a detector detects the frequency of maximum oscillatory movement of the membrane. The change in the frequency of maximum oscillatory movement is indicative of the amount of particulates collected on the membrane. Concentration of the particulates may be determined by considering the detected amount of particulates per unit time and by also determining the airflow rate.

FIG. 1

**Description**

The present invention relates generally to a system and method for measuring and monitoring the mass concentration of airborne particles, especially in fixed point source emission environments (e. g., stack effluent streams).

U.S. Patent No. 5,349,844, which is hereby incorporated by reference in its entirety, surveys several prior art techniques for monitoring the mass concentration of airborne particulates. For the more specific case of source monitoring in stacks, the most commonly used techniques for continuous measurements have been based on such techniques as (a) beta radiation attenuation with extractive sampling, (b) triboelectric sensing, and (c) optical methods such as opacity monitors (i.e., transmissometers) and back scattering photometers. Although used for ambient particulate monitoring, resonant mass sensing techniques have not been applied heretofore to source emission measurements.

Though the advantages and disadvantages of these techniques are well documented in the above patent and elsewhere, a brief review of select advantages and disadvantages is provided so that the instant invention may be better appreciated. Technique (a) requires a radioactive source (the latter presenting more of a problem with public perception than system performance), but more importantly, it often suffers from excessive probe losses associated with the need for sample extraction from the stack environment. Techniques (b) and (c) have the advantage of being in situ detectors, which do not exhibit significant probe losses. However, they are not based on true mass sensing, instead being based on surrogate principles, which are influenced by particle properties, and which require process and/or site specific gravimetric calibration.

In addressing several of the above shortcomings, U.S. Patent No. 5,349,844 describes a system and method that uses a taut filter membrane to collect airborne particulate. The filter is then oscillated by an acoustical or electrical device, for example, so that it can resonate at a natural frequency. The mass concentration of the airborne particulates may then be computed from the resonant frequency.

Other approaches have also been employed, including ones which collect particulates on a resonating quartz crystal by means of electrostatic precipitation and which then detect the amount of material collected on the quartz crystal (see U.S. Patent No.3,561,253, R D. Dorman, entitled "Apparatus and Method of Measurement of Particulate Mass"), but this particular technique is believed to be limited to relatively benign environments because of the components employed. Moreover, they require relatively frequent cleaning of the components making them unsuitable for many environments of interest. Similarly, another technique, the Tapered Element Oscillating Mass monitor, based on the resonant oscillation of an elastic element to which a filter cartridge is attached (U. S. Patent No. 4,391,338, Patashnick et al., entitled "Microbalance and Method for Measuring the Mass of Matter Suspended Within a Fluid"), has only been applied to ambient mass monitoring of particulates.

Briefly described, the present invention consists of a system for, and method of, accurately monitoring airborne particulates. Preferred embodiments of the present invention include a membrane and an electrostatic precipitator disposed in spaced relation to one surface of the membrane. An activation circuit causes the electrostatic precipitator to create an ionizing volume in which particulates are electrically charged. The charged particulates are collected on the membrane, and an actuation circuit causes oscillatory movement of the membrane. A detector detects the oscillatory movement of the membrane, which is indicative of an amount of particulate matter collected on the membrane.

According to one aspect of the invention, the membrane surface is substantially parallel to the direction of air flow in a housing receiving the airflow.

Under another aspect of the invention, the membrane is conductive and the system further includes an electrode positioned on an opposite side of the one surface of the membrane so as to form a capacitor with the membrane. In this manner, the detector may determine oscillations through a capacitance measurement.

Under another aspect of the invention, the actuation circuit causes the membrane to oscillate at a resonance frequency of the membrane with the particulates collected thereon, the resonance frequency being indicative of a mass increment of the membrane due to the collected particulates.

Under another aspect of the invention, the system may include a removable and replaceable frame for holding the membrane.

Under another aspect of the invention, a housing is provided to contain the membrane and the corona wire, together forming an electrostatic precipitator. The activation circuit and the actuation circuit, in contrast, are positioned remote from the housing. In this manner, the housing may be placed in a monitoring environment, such as a stack, whereas the circuitry may be placed in a less hostile environment.

Under another aspect of the invention, a mass increment of the membrane having the particulates collected thereon may be calculated in comparison to a predetermined mass, such as a tare mass of the membrane.

Under another aspect of the invention, the mass concentration of particulates may be determined by determining the rate of airflow and by the mass increment.

It will be appreciated by those skilled in the art that the foregoing brief description and the following detailed description are exemplary and explanatory of the present invention, but are not intended to be restrictive thereof or limiting of the advantages which can be achieved by the invention. Thus, the accompanying drawings, referred to herein and constituting a part hereof, illustrate preferred embodiments of the invention and, together with the detailed description, serve to explain the principles of the invention.

The invention will be more fully understood and other features and advantages thereof will become apparent from the description given below of exemplary embodiments of the invention, in which:

Figure 1 shows the system in perspective according to an exemplary embodiment of the invention;

Figure 2 shows an exemplary precipitator arrangement according to the an exemplary embodiment of the invention; and

Figure 3 shows an exemplary embodiment of the invention in use.

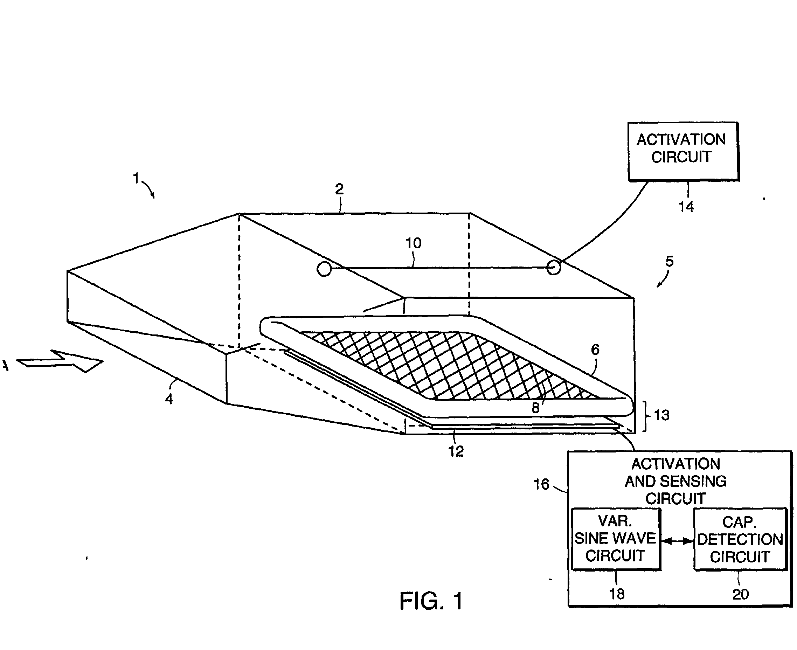

Referring now to the accompanying drawings, wherein like reference characters refer to like parts throughout the various views, there are shown in Figs. 1, 2 and 3, the preferred embodiments of the present invention.

A preferred embodiment of the invention uses electrostatic precipitation to cause airborne particulates to be collected on a membrane. The mass increment of the collected particulate matter is then detected by resonant oscillation of that membrane, e.g., transverse oscillation, and the mass concentration may be determined by also determining the rate of airflow. By detecting the mass increment the particulates may be continuously monitored, and the system does not need to replace or clean components after each measurement.

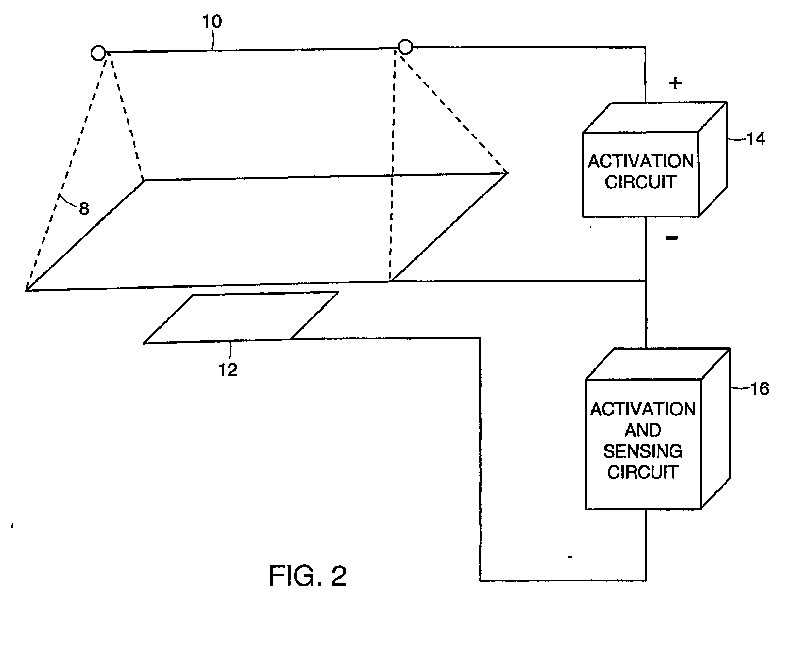

Figure 1 depicts a preferred embodiment of the invention. The system 1 includes a housing 2 having an inlet 4 and an outlet 5. The housing 2 contains a frame 6 which holds a metal membrane 8, positioned below a corona discharge wire 10 and above a plate electrode 12. The membrane 8 and electrode 12 together form a capacitor 13. Figure 2 depicts the precipitator elements 10 and 8 in electrical communication with an activation circuit 14, and the membrane 8 and electrode 12 are in electrical communication with an actuation and sensing circuit 16.

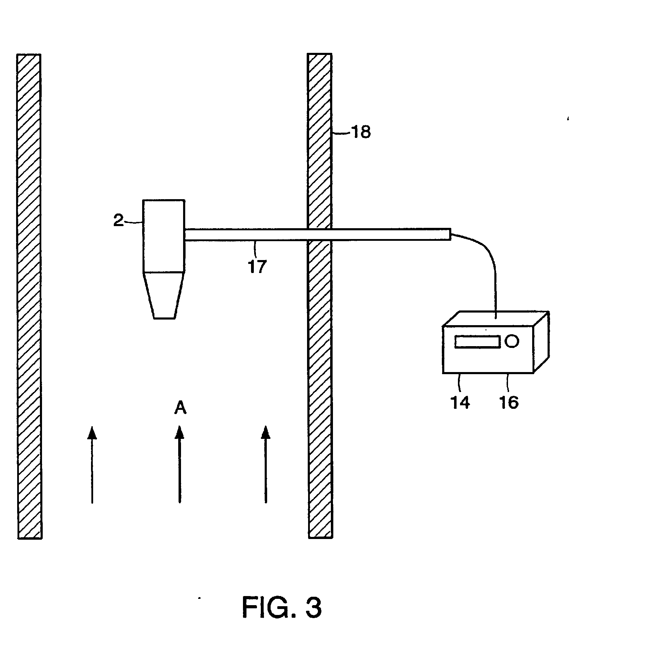

Housing 2 is preferably constructed of an electrically insulating material, e.g., ceramic/composite, capable of withstanding temperatures of up to several hundred degrees Celsius. The housing 2 may be attached to a supporting/locating wand 17 (typically made of stainless steel) as shown in Figure 3 so that the arrangement may be inserted into a stack 18 to attain the proper orientation, The circuits 14, 16 may be positioned outside of the stack, but in communication with the sensor/collector apparatus as described below. Housing 2 has an inlet 4 that is positioned to be open to the flow of air, shown by the arrow A, and an outlet 5 from which the air exits. Because the orientation of the surface of the membrane 8 is parallel to the air flow, the tension of the membrane 8 should not be affected thereby. Moreover, by facing the inlet 4 into the stream direction, the system 1 has low air resistance and isokinetic conditions are very nearly maintained over a wide range of stream velocities. This design, though not critical to operation, obviates the requirements for a pump and isokinetic control elements. Preferably, the transition from the inlet 4 to the housing's interior is designed as a divergent channel (for example, as shown) to reduce flow velocity in the interior, where the particulates are collected and sensed. This design facilitates the collection of particulates at high stack flow velocities.

Within the housing 2, a frame 6 is fixed to the housing 2 (e.g., by sliding it into slots on the interior walls of housing 2) and holds a metal membrane 8 taut. The membrane is attached under tension to the metal frame and affixed to that frame either by welding or by means of an adhesive (e.g., high temperature epoxy). Preferred embodiments use an appropriately thin foil type for membrane 8, e.g., stainless steel of around 0.0001 to 0.0005 inch thickness. Typical area of the collection/oscillating foil is of the order of 20 to 200 square centimeters.

Depending upon the membrane 8 and frame 6 used, thermal expansion and contraction may alter the membrane's tension and thus change the resonance frequency. Unless addressed, this change may be incorrectly interpreted as a consequence of collected (or lost) particulate matter. Thus, preferably a frame 6 and membrane 8 are selected so that expansion coefficients match. Other approaches may be used as supplements or substitutes to the above, such as compensating the calculations (discussed below) based on a measured temperature, or allowing sufficient warm up time until the sensor arrangement has reached a thermal equilibrium within the relatively stable thermal environment of the stack.

Under one embodiment, a corona wire 10 is used as one of the two electrodes of the electrostatic precipitator. Corona wire 10 is positioned on one side of and parallel to the membrane 8 and extends longitudinally in the direction of the flow A. In other embodiments the corona wire 10 may be positioned differently, e.g., perpendicular to the flow or at other angles. The corona wire is supported under tension by conventional attachments (not shown) to the insulating body 2. The corona wire 10 is in electrical communication with activation circuit 14, which applies a potential difference between the corona wire 10 and the upper surface of the taut membrane 8, creating a surrounding electrical field which ionizes the air molecules and, in turn, electrically charges the particulates passing through the interior of the housing. These charged particles are then electrically attracted to membrane 8 on which they deposit and to which they adhere. The applied potential within the electrostatic precipitator is of the direct current (d.c.) type wherein the corona wire may be either at a positive or a negative potential with respect to the taut foil collecting electrode. A positive corona wire (which generates positive ions) is preferred for this application because it generates a more uniform flow of ions than a negatively charged corona wire. These corona discharge characteristics are well known in the art of industrial electrostatic precipitators. The typical range of distances between the corona wire 10 and the collecting foil electrode 8 is 2 to 10 centimeters, and typical potential differences (i.e., applied voltage) are of the order of 5,000 to 15,000 volts, depending on inter-electrode distance and whether the corona wire is positive or negative with respect to the collecting electrode.

The rigid metal plate electrode 12 is located on an opposite side of the membrane 8. The plate 12 may be placed about 1 mm or less from the membrane 8, thus forming parallel plate capacitor 13. This rigid place may be as large or smaller in area than the taut foil membrane 8, and is permanently affixed to the interior of the housing 2, and not exposed to the particle laden air stream. Actuation and sensing circuit 16 includes a variable frequency sine wave generator 18 connected to plate 12 and membrane 8. Circuit 16 also includes a capacitance detection circuit 20 connected to plate 12 and membrane 8. Suitable forms of such detection circuits are well known in the art (e.g., impedance sensing circuitry, etc.). The sine wave generator and capacitance detection circuit cooperate as described below.

Alternatively, the resonance condition of the membrane (i.e., maximum oscillatory displacement) may be sensed by other means such as acoustic or optical techniques.

In operation, the housing 2 is placed in situ as described above. Once so placed, a particle laden stream flows into the inlet 4 and passes through an ionizing volume (see region bounded by dashed lines of Figure 2) of the electrostatic precipitator where the particles are charged. The charged particles are electrically attracted to membrane 8 because it is at a potential of opposite sign than the particle charge. The collection/oscillation membrane 8 serves as an electrically common element between the electrostatic precipitator, on one of its sides, and as a capacitive detector 12, on the other. Electrically, the membrane 8 is at ground potential with respect to the corona wire which is at a high d.c. potential, and with respect to the rigid plate electrode of the capacitive detection configuration on its opposite side.

Prior to and at the completion of a particle collection period (whose duration is in the typical range of minutes) the variable frequency sine wave generator 18 is caused to apply an alternating potential across the capacitor 13. This potential in turn should cause a minute oscillating deflection of the taut membrane 8. The capacitance detection circuit 20 senses the synchronously varying capacitance resulting from the deflection of the membrane 8. Closed-loop feedback or analogous control is used to monitor the detected capacitance and to control the sine wave generator 18 in response to tune the generator to the frequency at which the modulation of the capacitance maximizes. That frequency is the natural resonance of the taut membrane 8 with the particulates collected thereon.

As additional particles arc collected on the membrane 8 the mass of the membrane increases (i.e., because of the collected particulates). This results in a concomitant decrease of the resonance frequency, following the relationship:

$$\Delta m = m_0 \left[ (f_0/f_1)^2 - 1 \right]$$

where $\Delta m$ is the particulate mass increment just collected on the membrane (i.e., the most recent particulate sample), $m_0$ is the initial or tare mass of the membrane, and $f_0$ and $f_1$ are the initial and final resonance frequencies of the oscillating membrane, respectively, i.e., the resonance frequency when $m_0$ is measured and when later measurement is made to determine $\Delta m$. Alternatively, the detection of the resonance frequency could be performed continuously during the collection period, in which case the mass of the collected particulate matter is computed continuously from the change of resonance frequency.

Assuming that $m_0$ is constant and known, and if the particle collection pattern (i.e., distribution of particle deposit on membrane) remains essentially constant, and the collection efficiency of the electrostatic precipitation is near 100%, the system will not require calibration, i.e., it constitutes a primary measurement method. It should be understood that the actual or absolute value of the capacitance between the membrane 8 and fixed plate electrode 12 is immaterial to the mass measurement; only the degree of variability of this capacitance as a function of frequency is used to determine the membrane resonance frequency.

To determine the mess concentration of particulate matter, the flow rate through the sensor must be known in addition to the mass increment per unit time. This flow rate is the product of the inlet 4 cross sectional area and the stack effluent velocity directly upstream of the inlet, a parameter which needs to be known or measured typically by means of a pitot-tube. This assumes that the mass sensor unit presents negligible flow resistance at the stack gas velocity, a reasonable assumption given that the sensor is essentially wide open. Once mass/time and flow rate are known, computation of mass concentration is straightforward and conventional.

Based on the experience obtained with the taut resonant filter disc mass sensor described in U.S. Pat. No. 5,349,844 it can be expected that a mass increment of the order of 1/1000 of the mass of the resonating membrane ($m_0$) can be detected without much effort. Assuming a stainless steel metal membrane area of 20 cm$^2$ and a thickness of 0.00025 in (0.00063 cm), the resonating membrane mass would be 100 mg, approx. Therefore, a conservative minimum mass increment of about 0.1 mg should be measurable. To convert this value to a minimum measurable concentration, the sampling flow rate and a minimum measurement (sampling) time must be defined. Assuming an inlet area of 5 cm$^2$ and a typical stack gas velocity of 3000 ft/min (15 m s$^{-1}$) we obtain a flow rate of 0.0075 m$^3$ s$^{-1}$. If a practical measurement/sampling time of 1 minute is assumed, the minimum measurable concentration would be:

$$C_{min} = \frac{0.1 \text{ mg}}{(0.0075 \text{ m}^3 \text{ s}^{-1})(60 \text{ s})} = 0.22 \text{ mg/m}^3$$

This sensitivity is clearly compatible with most stack emission monitoring applications. Furthermore, extending the measurement time to 10 minutes, the minimum measurable concentration would be reduced by a factor of 10 (i.e., 0.022 mg/m$^3$).

For a parallel plate capacitor 13 (as described above), the force f between the two plates resulting from the electric charge q and the applied electric field E is equal to f = q E, where E = V/D , V being the applied voltage and D the distance between the plates. The charge on a capacitor of capacitance C is equal to: q = C V, and the capacitance (in air) in farads of a parallel plate capacitor with common area A is: C = 8.85 X 10$^{-12}$ A/D. Therefore, the force between the two plates is: f = 8.85 x 10$^{-12}$ AV$^2$ /D$^2$ (in SI units). For A = 20 cm$^2$, V = 100 volts, and D = 0.2 mm, f = 0.0044 newtons. Based on the taut filter experiments observed for the system described in U.S. Pat. No. 5,349,844, this force should result in a membrane deflection of the order of 10 $\mu$m, i.e., for this case, and in the absence of resonance, a 200-V peak-to-peak sine wave would cause a membrane oscillation with an amplitude of about $\pm$ 10 $\mu$m which, in turn, would produce a $\pm$ 5% modulation of the capacitance. At a resonance frequency, the amplitude of the membrane deflection would be many times larger (typically more than 10 times), thus producing a corresponding larger modulation of the membrane-to-plate capacitance.

*Alternative Configurations*

Using the above embodiments, a new measurement can be initiated with an already soiled membrane, since the measurement of mass is based on sensing its increment as a function of time. Thus, the membrane need not be replaced or cleaned after each measurement, and continuous monitoring may be achieved. However, the metal membrane 8 may in time get coated too thickly with particles and thus require replacement. To this end, under one embodiment, the membrane 8, mounted (pre-tensioned) on a frame 6, may be arranged as a replaceable "cassette." The cassette may be removed when needed and may be cleaned using ultrasonication, for example, after which it may be re-used. A control circuit could calculate the total amount of mass collected on a membrane and a threshold value may be set to indicate when a cassette (or membrane) needs to be replaced (or cleaned). This could be reset to zero on the control unit every time the cassette is replaced.

The taut membrane 8 described above need not vibrate at its lowest resonance frequency (the fundamental mode), but may instead oscillate at higher resonant modes for the measurement of accumulated mass. Operation at a higher resonance mode provides enhanced sensitivity and improved stability.

Though the above arrangements uses a relatively square or rectangular parallel plate capacitor, other arrangements may be used, e.g., circular places. Also, the two electrodes forming the parallel plate capacitor may be of differing size and or shape, in order to optimize mass sensing. For example, for higher resonance mode sensing, the fixed plate electrode 12 may be preferably of smaller area than the membrane 8, in order to sense the deflection of a specific section of the membrane. The modifications to the components, equations, and control circuitry are straightforward.

Many other forms of detection circuitry could be substituted. For example, the deflection of the membrane 8 may be detected with optical and other known techniques, as mentioned above.

The above embodiments may be used to continuously monitor particulates in potentially hostile and extreme environments (e.g., high temperature, corrosive gases, high moisture content). Moreover, the construction of the system is simple and should be realizable at lower cost in comparison to other continuous monitoring systems. Reliability should be higher than other devices that require components with moving parts, such as pumps, blowers, valves, etc.

Equally, this invention although especially suited for in-stack emission monitoring applications, is not limited to such uses, but could be designed for monitoring ambient (extramural) air, or for indoor air quality measurements. For such additional applications, an air mover such as a pump or blower would be required to ensure a sampling flow through the collection/detection chamber. Alternatively, such air motion could be induced by means of the ion wind concomitant with the corona electric discharge generated by the electrostatic precipitator incorporated in this invention.

While the invention has been described in connection with certain preferred embodiments, it will be understood that it is not intended to limit the invention to those particular embodiments. On the contrary, it is intended to cover all alternatives, modifications and equivalents as may be included in the appended claims. Some specific components, figures and types of materials are mentioned, but it is to be understood that such component values, dimensions and types of materials are, however, given as examples only and are not intended to limit the scope of this invention in any manner.

**Claims**

1.  A system for monitoring airborne particulates comprising:

    a membrane;
    an electrostatic precipitator disposed in spaced relation to one surface of the membrane;
    an activation circuit in electrical communication with the electrostatic precipitator causing the precipitator to create an ionizing volume to electrically charge the particulates therein and so that the charged particulates are collected on the membrane;
    an actuation circuit in electrical communication with the membrane to cause oscillatory movement of the membrane; and
    a detector in communication with the membrane to detect the oscillatory movement of the membrane, such that the oscillatory movement is indicative of an mass increment amount of particulates collected on the membrane.

2.  The system of claim 1 further comprising a housing having an inlet for receiving an airflow and wherein the one membrane surface is substantially parallel to the direction of air flow in the housing.

3.  The system of claim 1 wherein the membrane is conductive and further comprising an electrode positioned on an opposite side of the one surface of the membrane so as to form a capacitor with the membrane, and wherein the detector includes a capacitance detection circuit in electrical communication with the capacitor to detect capacitance variations caused by the oscillatory movement of the membrane.

4.  The system of claim 1 wherein the actuation circuit causes the membrane to oscillate at a resonance frequency of the membrane and of particulates collected thereon.

5.  The system of claim 3 wherein the actuation circuit and the capacitance detection circuit cooperate so that the actuation circuit is caused to actuate the membrane at a resonance frequency of the membrane and of particulates collected thereon.

6.  The system of claim 5 further comprising a removable and replaceable frame for holding the membrane.

7.  The system of claim 1 wherein the electrostatic precipitator is a corona wire and taut membrane combination.

8.  The system of claim 1 further comprising a housing containing the membrane and the electrostatic precipitator, and wherein the activation circuit and the actuation circuit are positioned remote from the housing.

9.  A method of monitoring airborne particulates, comprising the steps of:

    (a) receiving an airflow containing particulates along a direction in predetermined relation to a membrane;
    (b) inducing electrostatic precipitation to cause particulates in the airflow to ionize and to collect on the membrane;
    (c) oscillating the membrane having the particulates collected thereon;
    (d) detecting the oscillations of the membrane;
    (e) calculating a mass increment of the membrane having the particulates collected thereon in comparison to a predetermined mass.

10. The method of claim 9 wherein the membrane is positioned to be substantially parallel to the direction of airflow.

11. The method of claim 9 wherein step (c) operates in response to step (d) in a controlled manner to cause the membrane having particulates collected thereon to oscillate at a resonance frequency.

**12.** The method of claim 9 wherein step (d) detects the oscillations through a capacitive measurement.

**13.** The method of claim 11 wherein step (e) calculates the mass increment in comparison to the rare mass of the membrane.

**14.** The method of claim 9 further comprising the steps of determining the rate of airflow and calculating the mass concentration of particulates from the rate of airflow and the mass increment per unit time.

**15.** A system for monitoring airborne particulate, comprising:

an electrically insulating housing defining an inlet and an outlet through which air may flow;
a metal membrane disposed within the housing with the membrane surface parallel to air flowing between the inlet and outlet;
a corona wire disposed within the housing and in spaced relation to one surface of the membrane forming an electrostatic precipitator;
an activation circuit in electrical communication with the electrostatic precipitator causing the precipitator to create an ionizing volume to ionize particulates therein and so that the ionized particulates are collected on the membrane;
an actuation circuit in electrical communication with the membrane to cause oscillatory movement of the membrane; and
a detector in communication with the membrane and cooperating with the actuation circuit to detect the oscillatory movement of the membrane and to cause the membrane to oscillate at resonant frequency, such that the oscillatory movement is indicative of an mass increment amount of particulates collected on the membrane.

FIG. 1

ACTIVATION CIRCUIT

ACTIVATION AND SENSING CIRCUIT

VAR. SINE WAVE CIRCUIT

CAP. DETECTION CIRCUIT

EP 1 059 521 A2

FIG. 2

EP 1 059 521 A2

FIG. 3